# EUROPEAN PATENT APPLICATION

(11) **EP 2 792 241 A1**
(43) Date of publication of application: **22.10.2014**
(21) Application number: 12856773.2
(22) Date of filing: 07.12.2012
(51) Int. Cl.: A01N 25/10

(54) **THICKENING COMPOSITION FOR USE IN AGROCHEMICAL FORMULATIONS, USE OF A THICKENING COMPOSITION AND AGROCHEMICAL FORMULATIONS CONTAINING A THICKENING COMPOSITION**

(30) Priority: 12.12.2011 BR PI1105523
(71) Applicant: Oxiteno S.A. Industria e Comercio, 01317-910 Sao Paulo SP (BR)
(72) Inventor: AVILA, Oscar, Osvaldo, Hernandez, 45620 Tlaquepaque Jalisco (MX); CASTELANI, Priscila, 09080-300 Santo André - SP (BR)
(74) Representative: Hörschler, Wolfram Johannes
(86) International application number: PCT/BR2012/000503
(87) International publication number: WO 2013/086595

(57) **Abstract**

The present invention describes a novel thickening composition that comprises a mixture of esters of an alkoxylated polyol and is used to enhance the viscosity of agrochemical formulations. The composition according to the present invention may present itself in solid for or in liquid form, in this latter case further comprising one or more surfactants, solvents, and optionally water. The thickening composition described in this invention is compatible with a large variety of pesticides and inert components used in agrochemical formulations, and it has evidence that it is capable of improving the stability and the effectiveness of the said formulations.

## Description

### Field of the Invention

The present invention is related to a novel thickening composition comprising a mixture of alkoxylated esters of a polyol that is used to increase viscosity and provide enhanced stability and effectiveness to agrochemical formulations. This invention also discloses agrochemical formulations comprising the new thickening composition.

### Background of the invention

The most effective way to combat pests in crops is through the application of pesticides following the appropriate management practices. According to the present invention, pesticides are to be understood as comprising any substance, principle or active ingredient (AI), or any preparation, in either neat or diluted form, that is applied over plantations for the purpose of controlling or mitigating pests. The pesticides may be classified in accordance with the pests combated thereby, and among the most common ones to be found in the market are the herbicides, the insecticides, the fungicides and the acaricides.

Normally, the pesticides are found in the market either in pure form or incorporated in agrochemical formulations that generally comprise one or more AI (s) and other substances classified as inert that potentialize their effects and facilitate their application, such as carrier agents, adjuvants or additives. Such formulations may be applied directly on crops, or more commonly, upon dilution and formation of the so-called spray solution (sprayable slurry). The type of formulation that is employed is mainly defined based on the physical-chemical characteristics of the AI (s), and may consist in: a soluble concentrate (SL), an emulsionable concentrate (EC), and emulsion in water (EW) a concentrated suspension (SC), a suspoemulsion (SE), a microemulsion (ME), a dispersion or suspension concentrated in oil (OD), a dispersible concentrate (DC), a suspension of encapsulated material (CS), a dispersible granule (WG), a wettable powder (WP), among others (Standard ABNT NBR 2679:2004 - Agricultural Toxics and related substances, Technical products and formulations, Terminology).

The various types of agrochemical formulations are consequences of the existence of a wide variety of AI (s) of different chemical natures. For example, a water-soluble AI may be easily incorporated into a water-based SL, while a water-insoluble AI having a high melting point is commonly found in the form of an SC. For this motive, the agrochemical formulations are distinct and might evidence different inert components. However, a challenge that is commonly shared by all agrochemical formulations in liquid state is related to the maintenance of the shelf time thereof, which according to the current market culture is about 2 years. In those cases, the main problems having been observed are phase separation, turbidity and depositing in the form of a sediment, such phenomena reducing the time of validity of those products. One other difficulty is related to the application of the pesticide, whereby a large amount of the AI is lost after spraying due to not adhering to the surface of the foliage. Other formulations containing pesticides which action is dependent of the penetration of the AI (s) into the leaf (systemic pesticides) evaporate rapidly upon adhering to the foliage, thereby shortening the period of time required for diffusion of the molecules of the AI (s) into the plant and thus reducing the efficiency thereof. Due to that and other factors, in average just a part of the pesticide reaches its target during application, the rest being wasted by scattering about the environment.

The problems of shelf life of the agrochemical formulations may be minimized by mans of the use o additives or rheology modifiers that promote, for example, the inhibition of sediment-type depositing of the AI (s) in a given formulation. The problems of long shelf life of agrochemical formulations can be minimized through the use of rheology modifiers or additives that promote, for example, the inhibition of sediment in the AI (s) in a given formulation. Such additives increase the viscosity of the agrochemical formulation, providing greater stability and physical efficiency, and enabling its storage for a longer period. These additives are usually called swelling agents, anti-settling agents or thickeners, and may be present alone or in the form of a composition. The most widely used thickeners are polymers such as polyacrylics, polyacrylamides, hydrophobically modified cellulose derivatives, modified starches, co-polymers of cellulose derivatives, carboxyvinyl or polyvinyl pyrrolidones, polyethylenes, polyvinyl alcohol and derivatives, clays such as bentonite clays, or atapulgites, with high surface area silica, and natural gums such as guar gum, gelatin, dextrin, collagen and derivatives. For example, in patent No. US 4,379,144 (*Process for producing a flowable formulation fungicide,* 1983) there is described a fungicidal composition that utilizes high surface area silica as a thickener. On the other hand, in patent no. EP 0379852 already (*Compositions containing a polar and a nonpolar herbicide,* 1990) there is preferred the use of polyethylene to stabilize aqueous formulations of herbicides, while in patent No. EP 0253682 *(Suspension-type agrochemical formulation,* 1983) concerns the use of polyacrylic acids as thickening agents in various formulations of pesticides.

Because of its wide availability in the market, the polymeric thickener most widely used in agrochemical formulations is xanthan gum, as exemplified by the inventions US 4,061,770 *(Flowable, aqueous pesticide compositions of improved activity,* 1976), US 5,514,719 *(Fungicidal phenylbenzamides,* 1996), US 6,156,740 *(Synergistic fungicidal composition comprising a compound analogous to strobilurin,* 1999), US 6,149,930 *(Method of preparing fungicidal composition emulsions,* 1999) and EP 1183948 *(Strobilurin furtgicide chemical composition reduced in chemical damage,* 2000). However, the xanthan gum is not easy to handle even in laboratory scale since its correct manipulation requires a pre-dispersion in water and also requires the addition of preservatives or biocides to prevent the proliferation of microorganisms, which may increase the toxicity of the final agrochemical formulation. The use of xanthan gum as a thickener also presents limitations related to incompatibility with other components, apart from the difficulty of adjustment of the final formulations to correct viscosity, and the search for a replacement that is compatible with pesticides and can be used in agrochemical formulations becomes desirable.

It is a known fact that esterified alkoxylated polyol esters can act as associative thickeners in a manner similar to that described in U.S. patent No. US 6,440,431, incorporated herein by reference, and this class of compounds has been used as rheological additive in certain compositions. For example, in U.S. patent No. US 4,803,010 *(Water-soluble viscosity increasing agent,* 1989) a polyol containing between 40 and 400 moles of ethylene oxide (EO) for each mole of alcohol and comprising branched esterified fatty acids esterified is used to increase the viscosity of cleaning products. Similarly, U.S. Patent No. US 5,576,451 *(Esters of fatty acids with ethoxylated polyols,* 1996) deals with obtaining esters of ethoxylated polyols, preferably glycerol derivatives containing between 80 and 200 moles of EO, for use as thickeners in solutions of surfactants. Other uses of polyols with a similar structure are described in US patents Nos. US 4,614,622 and US 5,516,544. However, in none of those prior inventions was there mentioned the use of esterified alkoxylated polyols as thickeners in agrochemical formulations.

It has now been surprisingly found that certain esters of alkoxylated polyols produce thickening compositions that are compatible with various pesticides and have the ability to increase the viscosity and improve the stability of agrochemical formulations, in addition to increasing its retention time on the surface of the leaves and reduce evaporation of the droplets, thereby minimizing product loss during application and also increasing the efficiency thereof.

It is therefore an object of the present invention the provision of a novel thickener composition comprising a mixture of esters of an alkoxylated polyol for use in agrochemical formulations. It is another object of this invention to use this new thickener composition in order to increase viscosity and improve stability and efficiency of agrochemical formulations. Further objects of this invention are agrochemical formulations containing this new thickener composition. The advantages of the thickener composition of the present invention will become apparent in the following description.

### Summary of the Invention

This invention describes a novel thickener composition comprising a mixture esters of an of alkoxylated polyol and is used to increase the viscosity of agrochemical formulations. The composition of this invention may be present in solid or liquid form, in which case further comprising one or more surfactants, solvents and optionally water. The thickener composition described herein is compatible with a wide variety of pesticides and inert components used in agrochemical formulations, and it gas shown to be capable of improving the stability and efficiency of these formulations.

In short, the objective of the invention consists in the provision of a thickener composition for use in agrochemical formulations, which composition comprises a mixture of di-, tri-, tetra-, penta-and hexaesters of an alkoxylated polyol having more than 120 moles of for each mole of polyol and wherein the minimum content of tetra- and pentaesters preferably corresponds to 30% by weight of the total esters.

In a preferred embodiment of the thickener composition, alkoxylated polyol esters can be derived from fatty acids containing from 8 to 22 carbon atoms, preferably from stearic acid.

In another preferred embodiment of the thickener composition, the alkoxylated polyol may be obtained by combining ethylene oxide, propylene oxide, butylene oxide or mixtures thereof with pentaerythritol, neopentyl glycol, trimethylolpropane, glycerol, one or more glycerol derivative one or more sugar derivatives, or mixtures thereof

In another preferred embodiment of the thickener composition, the polyol may be alkoxylated sorbitol ethoxylate, with preferably more than 400 moles of ethylene oxide for each mole of sorbitol.

In another preferred embodiment the thickening composition may further comprise one or more solvents, surfactants and optionally water, wherein the solvents may belong to the class of glycols and the surfactants my be selected among polyethylene glycol esters, ethoxylated sorbitan esters, or their mixtures.

Preferably, the thickener composition according to the invention comprises from 35 to 60% by weight of one or more esters of an alkoxylated polyol containing more than 120 moles of the alkoxide for every mole of the polyol, from 25 to 40% by weight of esters of polyethylene glycols, from 1 to 5% by weight of ethoxylated sorbitan esters, from 0.5 to 2.0% by weight of glycols and optionally, up to 27% water by weight.

Another aspect of the invention provides the use of the above mentioned thickener composition for the preparation of agrochemical formulations, particularly to increase viscosity and provide greater stability and efficiency to agrochemical formulations.

In a preferred use, the agrochemical formulations are of the type of a soluble concentrate, an emulsifiable concentrate, an emulsion in water, a concentrated suspension, a suspo-emulsion, a micro-emulsion or dispersion in oil suspension concentrate, a dispersible concentrate, an encapsulated suspension, dispersible granules, or wettable powder.

In another embodiment, the present invention provides an agrochemical formulation containing a thickener composition comprising one or more herbicides, insecticides, fungicides or acaricides, and between 0.05 and 8.0% by weight of a thickener composition, preferably between 0.5 and 4 0%, where the thickener composition comprises a mixture from among di-, tri-, terra-, penta-and hexaesters of an alkoxylated polyol having more than 120 moles of the alkoxide for each mole of the polyol and which minimum content of tetra- and pentaesters preferably corresponds to 30% by weight of the total esters.

In a preferred embodiment of the agrochemical formulation, the alkoxylated polyol may be ethoxylated sorbitol having preferably more than 400 moles of ethylene oxide for each mole of sorbitol, and the esters are preferably obtained from stearic acid.

In another preferred embodiment, the agrochemical formulation further comprises carriers, adjuvants and other thickeners. Preferably, the other thickeners may be selected from among polymers, natural or modified clay.

### Brief Description of the Drawings

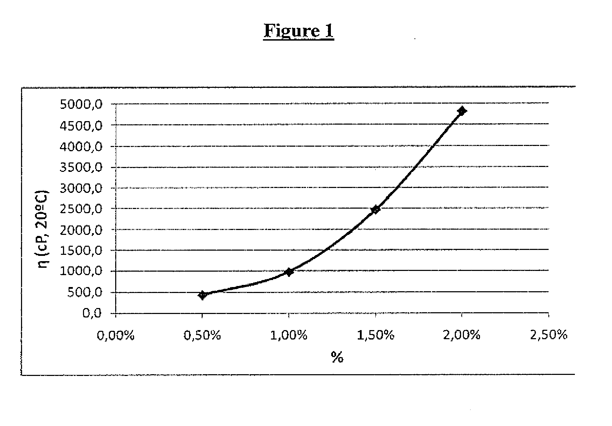

Figure 1 shows the increase in viscosity (η) measured in a Brookfield viscometer at 20° C, in an agrochemical formulation of a fungicide in the form of concentrated suspension in water due to the incorporation of varying amounts of thickener composition described in this invention, expressed in percentages by weight (%).

### Detailed Description of the Invention

The thickener composition that is disclosed in the present invention relates comprises a mixture of esters of an alkoxylated polyol. Suitable polyols for use in this invention contain at least three free hydroxyl groups, and among those that can be used are pentaerythritol, neopentyl glycol, trimethylolpropane, glycerol and its derivatives such as di- and triglycerol, as well as sugar derivatives such as mannitol, xylitol, sorbitol or mixtures thereof. For the suitable embodiment of the invention, the polyol must be alkoxylated with one or more of ethylene oxide (EO), propylene (PO) or butylene (BO), which react with its hydroxyl leading to the formation of random block polymers or co-polymers, with at least 120 moles of ethylene oxide per mole of polyol. The alkoxylated polyol is esterified with one or more fatty acids containing from 8 to 22 carbon atoms, whose chains can be linear or branched, saturated or unsaturated. The esterification with the said fatty acids produces a mixture that might contain di-, tri-, tetra-, penta- and hexaesters of the alkoxylated polyol. Esterified and alkoxylated polyols of similar structure may be obtained by well established procedures such as those described in U.S. patents Nos. US 4,983,329, US 5,464,874 and US 6,727,357.

In a preferred embodiment of this invention the polyol used is sorbitol, which is alkoxylated with EO until an ethoxylated polyol is obtained having, on average, more than 400 moles of EO for each mole of sorbitol. Subsequently, the ethoxylated sorbitol is esterified with linear saturated fatty acids, alone or in the form of mixtures, with the most suitable being myristic acid, palmitic acid, oleic acid and preferably stearic acid. Thus, one obtains a composition comprising a mixture of di-, tri-, tetra-, penta- and hexaesters of ethoxylated sorbitol, and pentaesters and tetraesters being in greater proportion to the total ester content based on the hydroxyl content and on the free acidity index of the composition, preferably amounting to more than 30% by weight of total esters. Such a composition is solid at room temperature and has a high thickening power in aqueous solutions and can be incorporated in various agrochemical formulations by simple dissolution in liquid formulations or, in the case of formulations of the type WG and WP, by simple mixing.

Both the handling as the incorporation of the thickener composition described herein in the various types of agrochemical formulations can be facilitated when the composition is in a liquid state. In this case, so that the composition still maintains a high thickening power, it is recommended to add one or more surfactants, solvents and optionally water. Thus, in another preferred embodiment of this invention, the thickener composition is presented in liquid form and comprises from 35 to 60% by weight of a mixture of esters of an alkoxylated polyol containing more than 120 moles EO in total for each mole of polyol, in addition to 25 to 40% by weight of esters of polyethylene glycols, 1 to 5% by weight of ethoxylated sorbitan esters, 0.5 to 2.0% by weight of glycols and optionally up to 27% water by weight. An example of the thickener composition in liquid form is shown in Table 1. Such a composition can be conveniently used in the preparation of several agrochemical formulations, among which SL, EC, EW, SC, SE, ME, OD, DC, CS, WG and WP.

**Table 1: Example of composition of a thickener in liquid form.**

| **The weight percentages are relative to the total composition.** | |
|---|---|
| COMPONENTS | PERCENTAGE BY WEIGHT |
| Mixture of ethoxylated sorbitol esters | 50% |
| Polyethylene glycol esters | 21% |
| Ethoxylated sorbitan esters | 2% |
| Propylene glycol | 1% |
| Water (optional) | 26% |

The use of the thickening composition of this invention to increase the viscosity and provide greater stability and efficiency to agrochemical formulations has several advantages. For example, due to the chemical nature of the esterified alkoxylated polyols employed herein, the thickener composition of Table 1 may be incorporated directly to agrochemical formulations, being easily mixed to homogeneity. The viscosity of the formulations increases sharply as the thickener composition is incorporated, allowing an easy achievement of the desired final value. On an industrial scale, this operation may be done in an open reactor fitted with a stirrer and operating at ambient temperature under gentle agitation. Use of the thickener composition of this invention also eliminates the step of pre-dilution with water that is employed when utilizing xanthan gum, which is necessary for hydration of the gum and must be carried out in a second reactor, on average, 24 hours prior to incorporation thereof into a formulation. Furthermore, the use of a thickener composition described herein to replace xanthan gum leads to the reduction or complete elimination of the need to add preservatives to agrochemical formulations, which reduces costs and improves toxicological classification of the formulations. This set of advantages creates savings in terms of time, of energy and of resources in the preparation of the formulations. Another advantage of using the composition according to the invention in agrochemical formulations refers to the reduced evaporation of the droplets of the spray solution that contain(s) the AI (s) and to the increased retention time of those droplets onto the surface of the leaves, thereby minimizing product loss during application and increasing its efficiency.

Due to the chemical nature of the esterified alkoxylated polyols selected for use in this invention, the thickener composition in its solid or liquid form, is compatible with a wide variety of pesticides and may be incorporated in agrochemical formulations comprising one or more AI (s). Based on the nomenclature commonly used *(*The Pesticide Manual, Tomlin, C.D.S. (Ed.), 2006, 14th edition, British Crop Production Council), examples of pesticides with which the thickener composition of this invention shows compatibility include the following classes of herbicides: 4-(aryloxyphenoxy) alkanoic acid, 2-(4-aryloxyphenoxy) alkanoic acid, 1,3,5-triazine, 1,3,5-triazine-2,4-dione, 2-(aryloxyphenoxy) propionamide, 2,6-dinitroaniline, 2-chloroacetanilide, acetamide, anilide acid, aromatic acid, arylaminopropionic acid, ariylcarboxylic acid, arilyloxyphenoxy propionate, benzamide, benzenedicarboxylic acid, benzimidazole, benzofuran, benzoic acid, benzonitrile, benzothiadiazinone, bipiridilium, carbamate, chloroacetamide, cyclohexanedione, oxime, dinitroaniline, dinitrophenol, diphenyl ether derivative of glycine, halogenated alkanoic acid, hidroxybenzonitrile, imidazolinone, isaoxazole, isoxazolidinone, N-phenylphthalinide, organoarsenic, organochloride, organophosphorus, oxadiazole, oxyacetamide, phenoxycarboxylic acid, phenyl carbamate, phenylpyrazole, phenylpyridazine, phenylurea, phosphinic acid, phosphoramidate, phosphorodithioate, phthalamate, pyrazole, pyridazine, pyridazinone, pyridine, pyridinecarboxyamide, pyridine carboxylic acid, pyrimidindione, pyrimidine, pyrimidinyloxybenzoic acid, quinoline carboxylic acid, thiocarbamate, semicarbazone, sulfonylurea, thiadiazole, thiocarbamate, triazine, triazinone, triazole, triazolinone, triazolocarboxamide, triazolopyrimidine, triacetone, uracyl and urea. Examples of classes of fungicides include: QiI, strobilurine type, strobilurine analogue, triazole, phenylamide, benzimidazole, vanilamide carbamate, aromatic hydrocarbon, pyridynecarboxtamide, aminopyrimidinol, phthalimide oxatincarboxamide, cyclopropanocarboxamide, chlorophenylnitroaniline, chloronitrile, phenylacetamide, cyanoacetamide oxime anilinopyrimidine, alkylenebis (dithiocarbamate), sulfamide, carboxyamide, pyridazinone, N-phenyl carbamate, pyrimidinamine, cinnamic acid amide, quinone, morpholine, guanidine, phosphorothiolate, thiazolcarboxyamide, pyrimidine, furancarboxyamide hidroxyanilide, propionamide, piperidine, organotin, dimethyldithiocarbamate, 2,6-dinitroaniline , phenylpirrole, benzamide, pyridinylethylbenzamide, benzenesulfonamide, phenylbenzamide, phosphonate, pyrazolecarboxyamide, guanidine, imidazole, dicarboxiamide, mandelamide, benzophenone, butyrolactone, phenylurea, isobenzofuranone, piperidine, polyoxine, carbamate, quinazolinone, pyrroloquinolinone, quinoline, thiophencarboxamide, spiroquetalamina, thiadiazolcarboxyamide, benzotriazine, triazolobenzothiazole, piperazine, glucopyranosyl, 3',4'-dicloroanilide, organomercury, triazine, urea, enupiranuronic acid, anilide, aminopyrimidinole, organophosphate, diazosulphonate, organoarsenic and pyridine.

The thickener composition is also compatible with different classes of pesticides, including organophosphate, neonicotinoid, oxime carbamate, pyrethroids, carbamate, nereistoxin analog, cyclodiene organochloride, benzoilurea, avermectin, phenylpyrazole, juvenile hormone mimic, diacilhydrazine, oxadiazine, selective blocker of food, fumigant, dimethylcarbamate, phenoxydicarboxylic acid precursor, organophosphorus, carbamoyloxime and urea as well as various acaricides such as those belonging to the classes organotin, benzilate, termite growth inhibitors, METI, pyrethroid organochloride, benzimidazole and organophosphate.

It is important to mention that the thickener composition of this invention, either in solid or liquid form, is also compatible with carriers, adjuvants and additives commonly used in agrochemical formulations. Among the additives with which the composition of this invention is compatible are other thickeners that may be organic or inorganic, such as other polymers or minerals, among which natural clays or modified clays. This compatibility allows the thickener composition of this invention to be used without restrictions relatively to the type of agrochemical formulation and its components.

In general, the thickener composition of this invention may be used in amounts ranging from 0.05 to 8.0% by weight relative to the total for a given formulation, preferably between 0.5 and 4.0%. The exact amount of the thickener composition to be incorporated in each formulation depends on its type, its components, its process of preparation and final viscosity that is desired to achieve.

For example, an agrochemical formulation of the type of suspension concentrate in water is usually prepared by dispersing and grinding to reduce the particle size of the AI (s) used, which are generally solids insoluble in water at room temperature and may further comprise one or more: ( i) humectants or surfactants, to allow the AI (s) to be wetted by water, (ii) dispersants for adsorbing the particles of the AI (s) to prevent their flocculation; (iii) antifreeze components, to avoid freezing the agrochemical formulation when subjected to low temperatures, (iv) anti-foaming agents to prevent foam formation in the grinding process, and (v) rheological additives to increase the viscosity of formulation and to avoid sedimentation of the particles. The thickener composition of the present invention proved to be very suitable to act as a rheological additive, and is also compatible with the other ingredients of the formulation. An example of an agrochemical formulation comprising the thickener composition of this invention is shown in Table 2. The thickening composition used in this embodiment is detailed in Table 3. This formulation showed high stability and desirable rheological properties for a concentrated suspension in water, no sedimentation was observed or no change in particle size after a period of AI shelf life simulation tests.

**Table 2: Example of a chemical formulation in the form of a concentrated suspension in water comprising a fungicide, the thickening composition of this invention and other components.**

| COMPONENTS | CONCENTRATION (g/L) |
|---|---|
| Carbendazin | 500 |
| Co-polymer EO/PO | 25 |
| Phosphated surfactant | 28 |
| Ethoxylated laurylic acid | 7 |
| Glycerin | 42 |
| Siliconated anti-foaming agent | 1 |
| Thickening composition of Table 3 | 20 |
| Water | Quantum sufficit (q.s.p) |

The thickening power of the thickener composition of this invention can be easily verified by measurements of viscosity and other rheological properties. For example, using as a basis the formulation in Table 2, samples were prepared with different amounts of the thickener composition of Table 1 whose viscosities (η) were measured on a Brookfield viscometer at 20° C. The results are shown in the graph of Figure 1, which shows the variation of viscosity, expressed in cP, depending on the amount of thickener composition in samples of the formulation, expressed in percentage (%). There is noticed a rapid increase in viscosity after addition of 0.5% of the thickener composition, and the sample containing 2.0% of the composition had viscosity of 4800 cP. The increase of viscosity obtained meets performance requirements demanded by the market, and the thickener composition of this invention is well accepted.

## Claims

1. A thickening composition for use in agrochemical formulations, **characterized by** comprising a mixture of di-, tri-, tetra-, penta- and hexaesters of an alkoxylated polyol having more than 120 moles of the alkoxide for every mol of polyol, and which minimum content of tetra- and penta-esters preferably corresponds to 30% by weight of the total esters.

2. A thickening composition as claimed in claim 1, **characterized by** the fact that the alkoxylated polyol esters being obtained from fatty acids containing between 8 and 22 carbon atoms, preferably of stearic acid.

3. A thickening composition as claimed in any one of claims 1 or 2, **characterized in that** the alkoxylated polyol is obtained by the combination of ethylene oxide, propylene oxide, butylene oxide , or the mixtures thereof with pentaerythritol, neopentyl glycol, trimethylolpropane, glycerol, one or more glycerol derivatives one or more sugar derivatives, or mixtures thereof.

4. A thickening composition as claimed in any one of claims 1 to 3, **characterized in that** the alkoxylated polyol is ethoxylated sorbitol, preferably evidencing a proportion of more than 400 moles of ethylene oxide for each mole of sorbitol.

5. A thickening composition as claimed in any one of claims 1 to 4, **characterized by** further comprising one or more solvents, surfactants, and optionally water.

6. A thickening composition as claimed in claim 5, **characterized in that** the solvents belong to the class of glycols and the surfactants are selected from among polyethylene glycol esters, ethoxylated sorbitan esters, or mixtures of the same.

7. A thickening composition as claimed in any one of claims 5 or 7, **characterized by** comprising from 35 to 60% by weight of one or more esters of an alkoxylated polyol containing more than 120 moles of the alkoxyde for each mole of the polyol, from 25 to 40% by weight of polyethylene glycol esters, from 1 to 5% by weight of ethoxilated sorbitan esters, from 0.5 to 2.00 by weigh of glycols, and optionally water in an amount of up to 27% by weight.

8. Use of a thickening composition, **characterized by** being meant for the purpose of preparing agrochemical formulations, the said thickening composition comprising a mixture of among di-, tri-, tetra-, penta- and hexaesters of an alkoxylated polyol evidencing more than 120 moles of the alkoxide for each mole of polyol and which minimum amount of tetra- and pentaesters corresponding preferably to 30% by weight of the total esters.

9. Use of a thickening composition as claimed in claim 8, **characterized in that** the alkoxylated polyol is ethoxylated sorbitol evidencing preferably more than 400 moles of ethylene oxide for each mole of sorbitol, and **in that** the esters are preferably obtained from stearic acid.

10. Use of a thickening composition as claimed in any one of claims 8 or 9, **characterized by** being meant for the purpose of increasing the viscosity and provide enhanced stability and effectiveness to the agrochemical formulations.

11. Use of a thickening composition as claimed in any one of claims 8 to 10, **characterized in that** the agrochemical formulations being of the soluble concentrate type, or of the type of emulsionable concentrate, emulsion in water, concentrated suspension, emulsion in water, concentrated suspension, suspoemulsion, microemulsion, dispersion or suspension concentrated in oil, dispersable concentrate, suspension of an encapsulated material, dispersible granules or wettable powder.

12. An agrochemical formulation containing a thickening composition comprising one or more herbicides, insecticides, fungicides or acaricides and between 0.05 to 8.0% by weight of a thickening composition, preferably between 0.5 and 4.0%, **characterized by** the fact of the thickening composition comprising a mixture of di-, tri-, tetra-, penta- and hexaesters of an alkoxylated polyol having more than 120 moles of the alkoxide for each mole of polyol, preferably in an amount of 30% by weight of the total weight of esters.

13. An agrochemical formulation as claimed in claim 12, **characterized in that** the alkoxylated polyol is the ethoxylated sorbitol evidencing preferably more than 400 moles of ethylene oxide for each mole of sorbitol, and **in that** the esters are preferably obtained from stearic acid.

14. An agrochemical formulation as claimed in any one of claims 12 to 13, **characterized by** further comprising carrier agents, adjuvants and other thickeners.

15. An agrochemical formulation as claimed in claim 14, **characterized in that** the other thickeners are polymer, natural clay or modified clay.
